# EUROPEAN PATENT SPECIFICATION

(11) **EP 0 458 306 B1**
(45) Date of publication and mention of the grant of the patent: **30.07.1997**
(21) Application number: 91108281.6
(22) Date of filing: 22.05.1991
(51) Int. Cl.: G06K 19/07, G06K 19/073, G06K 19/077, G07F 7/10

(54) **Portable information medium**
Tragbarer Informationsträger
Support d'information portable

(30) Priority: 24.05.1990 JP 132577/90
(43) Date of publication of application: 27.11.1991
(73) Proprietor: KABUSHIKI KAISHA TOSHIBA, Kawasaki-shi, Kanagawa-ken 210 (JP)
(72) Inventor: Hirokawa, Katsuhisa, c/o Intellectual Property Div, Minato-ku, Tokyo 105 (JP)
(74) Representative: Blumbach, Kramer & Partner

(56) References cited:
- EP-A- 0 114 368
- EP-A- 0 169 941
- EP-A- 0 337 185
- DE-A- 4 018 688
- NEW ELECTRONICS.INCORPORATING ELECTRONICS TODAY vol. 20, no. 18, 15 September 1987, LONDON, GB, pages 44-45, S. BAKER "SINGLE CHIP IC CARD FOR INCREASED SECURITY"

## Description

The present invention relates to a portable medium having a control element, memory element and the like, and to an information processing apparatus which uses this portable medium to encrypt information and store the information in a recording medium, and uses the portable medium to decode the information stored in the recording medium.

Conventionally, IC cards are classified into two types: the first type has a CPU, memory, arithmetic operation circuit, etc. incorporated in a one-chip LSI (Large Scale Integrated Circuit) on a same plane, and the second type has these components incorporated in each of multiple-chip LSIs to perform multiple functions.

When these IC cards are disassembled, the content of the incorporated LSI may be analyzed from the way by which the surface pattern of the LSI is formed, using optical reading means. For instance, the stored address of secret information stored in the IC card memory (ROM) may be analyzed or broken, or an encryption key and encrypting means may be analyzed. Accordingly, IC cards with a control element, memory element and other necessary components integrated therein have a security problem due to the possibility that the functions of the incorporated IC may be optically analyzed.

There is an information processing apparatus which encrypts information and stores it on an optical disk as an information recording medium, and permits only an authorized person to read out the encrypted information on the optical disk, decrypt the encrypted information and output it for information security.

Such an information processing apparatus is designed to execute a fixed encryption for all the optical disks handled by the apparatus. That is, the same encryption is performed for multiple optical disks that are handled by the information processing apparatus. This raises a problem that encrypted information stored on any optical disk may easily be decrypted if the encryption is analyzed from one of these optical disk.

New Electronics, vol. 20, no. 18, 15 Sept. 1987 (London GB), pages 44, 45: "A single chip IC card for increased security" describes an IC card comprising a single chip which contains a microprocessor, a ROM, a EEPROM and a RAM. There, some safeguards have been taken to ensure that the sensitive information cannot be read out from the ROM unauthorized. No test pads are provided which could be probed to read the ROM. Furthermore, the construction of the chip prevents examination of the ROM contents if the chip is dismantled.

It is an object of the present invention to provide a portable medium, which has necessary components incorporated in an integrated form, and can prevent optical analysis of the functions of the incorporated IC, thereby ensuring an improved security measure.

This object is solved by the features mentioned in claim 1. Some further details are defined in the subclaims.

According to one aspect of the present invention, the portable medium may include means for storing secret information, control means, connected to the storing means, for processing the secret information and exchanging information with an external unit, and means, located on a topmost layer of the multi-layered structure, for protecting the information stored in the storing means whose content is unanalyzable upon analysis.

The portable medium may include an EEPROM for storing input information, a ROM for storing secret data and a program necessary for a control operation the ROM underlying a second layer in the multi-layered structure, and a CPU for performing general control of the portable medium and exchanging information with an external unit.

According to another aspect, the portable medium may include an EEPROM, located on a topmost layer, for storing input information, a ROM, located on a second layer, for storing secret data and a program necessary for a control operation, a special arithmetic operation circuit and a RAM, both located on a third layer, for encrypting and decrypting an input signal, and a CPU, located on a bottom layer, for performing general control of the portable medium and exchanging information with an external unit.

With the above structures, a portable medium having a control element, memory element and other necessary components is designed to have the individual components incorporated in a multi-layered integrated circuit, with the topmost layer constituted by an analyzable element.

In the present invention, an encryption key is read by a first reading means from a portable medium having the encryption key stored in an unanalyzable manner, and then information supplied from an information supplying means are encrypted using the encryption key read out by the first reading means. The encrypted information area stored on an information recording medium and thereafter the information are read from the information recording medium. The information read out by the second reading means are decrypted using the encryption key read out by the first reading means and then the decrypted information are outputted.

A portable medium which is provided with information encrypting means and information decrypting means in an unanalyzable manner is received by receiving means. Then information supplied from an information supplying means are encrypted using the information encrypting means of the portable medium received. The encrypted information are stored on an information recording medium. The information are thereafter read out from the information recording medium, and then the information are decrypted using the information decrypting means of the received portable medium and the decrypted information are outputted.

This invention can be more fully understood from the following detailed description when taken in conjunction with the accompanying drawings, in which:
Fig. 1 is a schematic plan view illustrating an IC card as a portable medium according to one embodiment of the present invention;
Fig. 2 is an exemplary diagram illustrating the internal connection of the IC card in Fig. 1;
Fig. 3 is a conceptual diagram exemplifying the circuit structure of a functional element in Fig. 1;
Fig. 4 is a block diagram showing the functional connection between individual sections of the functional element in Fig. 3;
Fig. 5 is a schematic perspective view exemplifying the outer appearance of the functional element in Fig. 3;
Fig. 6 is a schematic plan view illustrating an IC card as a portable medium according to another embodiment of the present invention;
Fig. 7 is an exemplary diagram illustrating the internal connection of the IC card in Fig. 6;
Fig. 8 is a conceptual diagram exemplifying the circuit structure of a functional element in Fig. 6;
Fig. 9 is a block diagram showing the functional connection between the individual sections of the functional element in Fig. 8;
Fig. 10 is a schematic perspective view exemplifying the outer appearance of the functional element in Fig. 8;
Fig. 11 is a block diagram illustrating the arrangement of an electronic filing system as one embodiment of an information processing apparatus; and
Fig. 12 is a flowchart for explaining the operation of the electronic filing system in Fig. 11.

Preferred embodiments of the present invention will now be described with reference to the accompanying drawings.

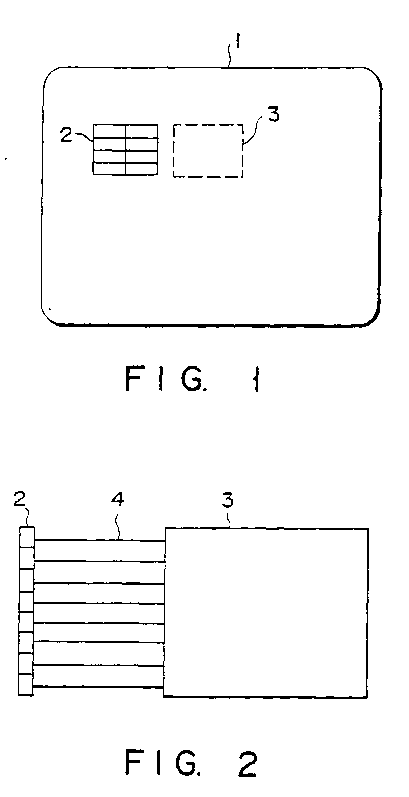

Fig. 1 is a schematic plan view showing an IC card 1 as a portable medium according to one embodiment of the present invention. The IC card 1 is an IC card having a contact, which conforms to ISO 7816 specified in the International Organization for Standardization. Provided on the surface of the IC card 1 is a contact 2 for connection to an external device (not shown). A functional element 3, which is constituted by an IC chip connected to the contact 2, is buried in the IC card 1. The functional element 3 is supplied with the power and a control signal through the contact 2 from the outside of the IC card 1, and exchanges and processes various information.

Fig. 2 is an exemplary diagram illustrating the internal connection of the IC card 1 shown in Fig. 1. The contact 2 has contact portions connected to the respective I/O terminals of the functional element 3 by an internal connecting circuit 4.

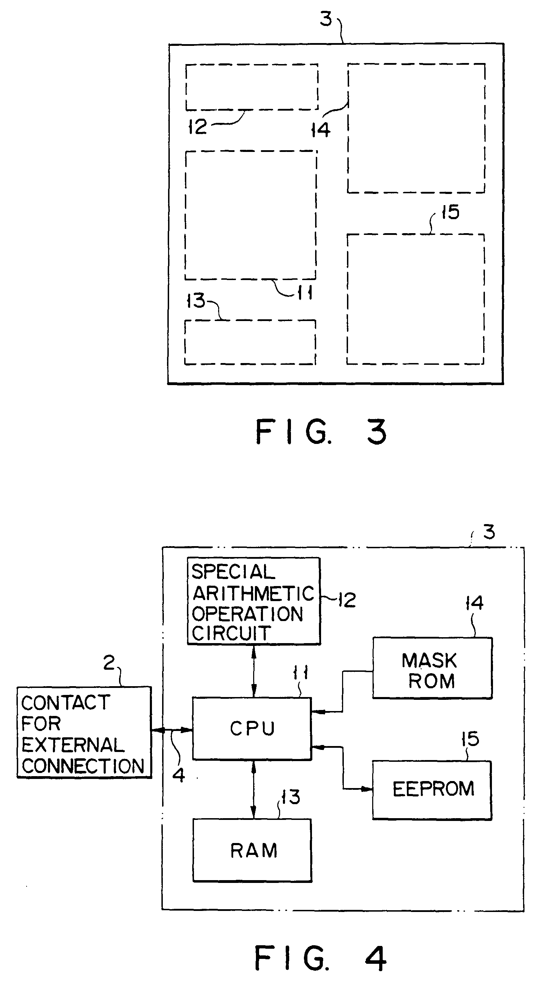

Fig. 3 is a conceptual diagram exemplifying the circuit structure of the functional element 3. The functional element 3 comprises a CPU 11 for executing general control of the element 3, a special arithmetic operation circuit 12 for encrypting or decrypting an input signal, a RAM 13, a mask ROM 14 for holding a control program, etc., and an EEPROM 15 for storing information.

Fig. 4 is a block diagram showing how individual sections of the functional element 3 are connected functionally. The special arithmetic operation circuit 12, the RAM 13, the mask ROM 14 and the EEPROM 15 are all connected to the CPU 11. The CPU 11 is connected to the contact 2 by the internal connecting circuit 4.

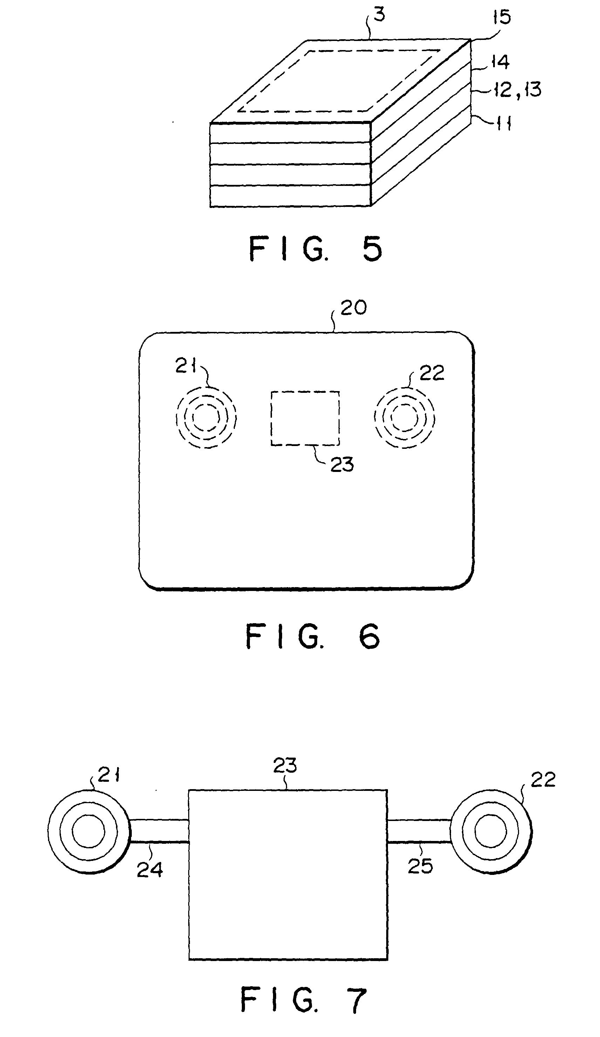

Fig. 5 is a schematic perspective view exemplifying the outer appearance of the functional element 3 in Fig. 3. This functional element 3 is designed as a one-chip multi-layered LSI (Large-Scale Integrated Circuit). The LSI has an integrated circuit constituting the EEPROM 15, which may undergo optical reading (analyzing) without problems, on its top layer, an integrated circuit constituting the mask ROM 14 on the second layer, an integrated circuit constituting the special arithmetic operation circuit 12 and the RAM 13 on the third layer, and an integrated circuit constituting the CPU 11 on the bottom layer. The reason why the EEPROM 15 can be subjected to optical reading is because what is stored there can not surface by the optical reading. It will be possible to design the multi-layered function element 3 in the above manner using a three-dimensional LSI technology, for example.

As described above, the functional element 3 in this embodiment has a three-dimensional structure instead of the conventional two-dimensional structure. Therefore, it is possible to reduce the chip area, to protect the IC card better against mechanical force applied thereto, and to increase the amount of storable information and executable functions (i.e., to ensure multi-functioning). Further, since the integrated circuit constituting the EEPROM 15, whose content cannot be found out through circuit arrangement analysis, is provided on the top layer of the functional element 3, it is possible to prevent the optical analysis of the control program, a personal identification number and key, etc., which are stored in the special arithmetic operation circuit 12 and the mask ROM 14, which underlie the first layer, and the EEPROM 15 on the top layer. Even if the IC card 1 is disassembled to analyze the personal identification number or the like, therefore, the functions of the incorporated LSI cannot be optically analyzed, thus improving the security of the program, and the personal identification number and key which are stored in the IC card 1.

If necessary, an integrated circuit comprising only a pad as an I/O terminal to connect to the internal connecting circuit 4, may be formed as a layer, on the layer where the integrated circuit constituting the EEPROM 15 is formed. This can further prevent the circuit structure of the EEPROM 15 from being analyzed optically.

A test circuit for checking the operation of the functional element 3 and a pad as an I/O terminal of the test circuit may be provided in the functional element 3. Since the test circuit may be activated by a third party to analyze the operation of the functional element, however, the test circuit should be set unactivatable after the checking. For example, the test circuit may be designed not to be activated when a particular signal is sent from the test pad.

Further, a IC card without a contact may be used as a portable medium. This contactless IC card will now be described.

Fig. 6 is a schematic plan view showing a contactless IC card 20 as a portable medium according to the present invention. Buried in the contactless IC card 20 are a coil 21 for exchanging information with an external device (not shown), a coil 22 for receiving the power and a control signal, and a functional element 23 constituted by an IC chip, which is constituted by an IC chip connected to the coils 21 and 22. The functional element 23 is supplied with the power and a control signal through the coil 22 from the outside of the IC card 20, inputs and outputs an information transfer signal through the coil 21, and exchanges and processes various information.

Fig. 7 is an exemplary diagram illustrating the internal connection of the IC card 20 shown in Fig. 6. The coils 21 and 22 are connected to the respective I/O terminals of the functional element 23 by internal connecting circuits 24 and 25.

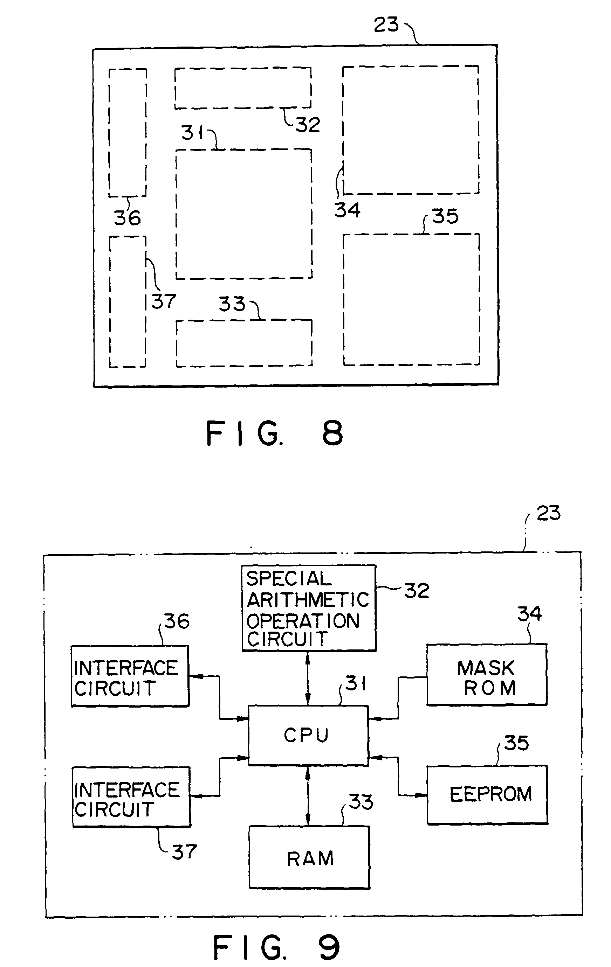

Fig. 8 is a conceptual diagram exemplifying the circuit structure of the functional element 23 in Fig. 6. The functional element 23 comprises a CPU 31 for executing general control of the element 23, a special arithmetic operation circuit 32 for encrypting and decrypting an input signal, a RAM 33, a mask ROM 34 for holding a control program, etc., an EEPROM 35 for storing information, an interface circuit 36 serving as an interface of the information transferring coil 21, and an interface circuit 37 serving as an interface of the coil 22 for supplying the power and a control signal.

Fig. 9 is a block diagram showing how individual sections of the functional element 23 in Fig. 8 are connected functionally. The special arithmetic operation circuit 32, the RAM 33, the mask ROM 34, the EEPROM 35 and interface circuits 36 and 37 are all connected to the CPU 31.

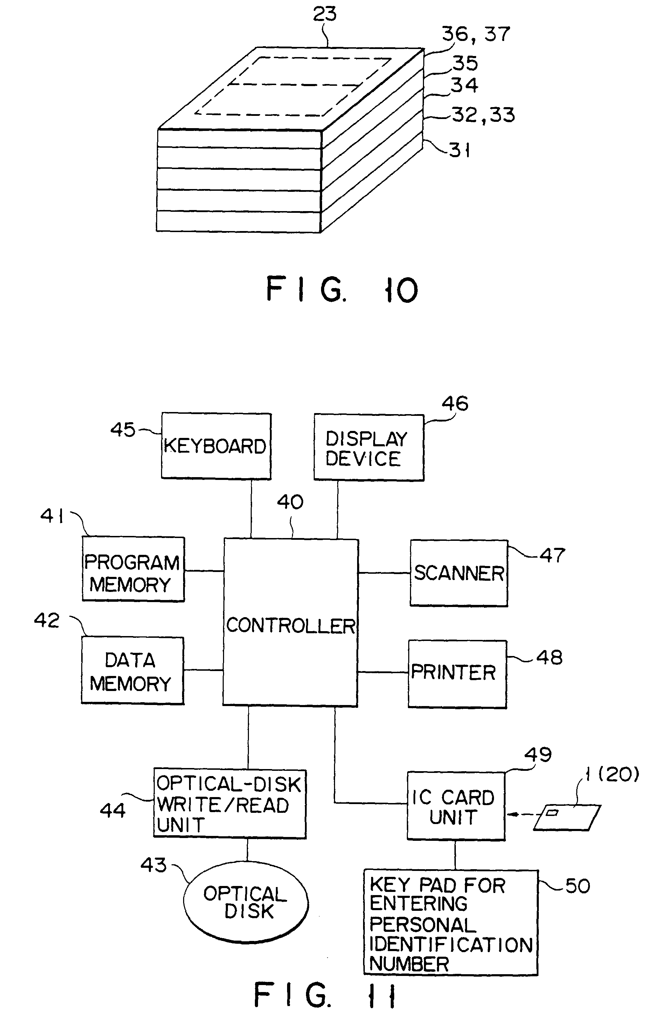

Fig. 10 is a schematic perspective view exemplifying the outer appearance of the functional element 23 in Fig. 8. This functional element 23 is designed as a one-chip multi-layered LSI (Large-Scale Integrated Circuit). The LSI has the interface circuits 36 and 37, which may undergo optical reading without problems, on its top layer, an integrated circuit constituting the EEPROM 35 on the second layer, an integrated circuit constituting the mask ROM 34 on the third layer, an integrated circuit constituting the special arithmetic operation circuit 32 and the RAM 33 on the fourth layer, and an integrated circuit constituting the CPU 31 on the bottom layer.

According to the contactless IC card 20 of this embodiment, it is possible to increase the amount of the information to be stored in the contactless IC card 20 and the number of functions incorporated in the contactless IC card 20, as in the case of the IC card 1, and it is also possible to improve the reliability of information security. If necessary, an integrated circuit, comprising only a pad as an I/O terminal to connect to the internal connecting circuits 24 and 25, may be formed as a layer, on the layer where the interface circuits 36 and 37 are formed. This can further prevent the interface circuits 36 and 37 from being analyzed optically.

As in the case of the IC card 1, a test circuit for checking the operation of the functional element 23 and a pad as an I/O terminal of the test circuit may be provided in the functional element 23. In this case, however, the test circuit should be set unactivatable after the checking.

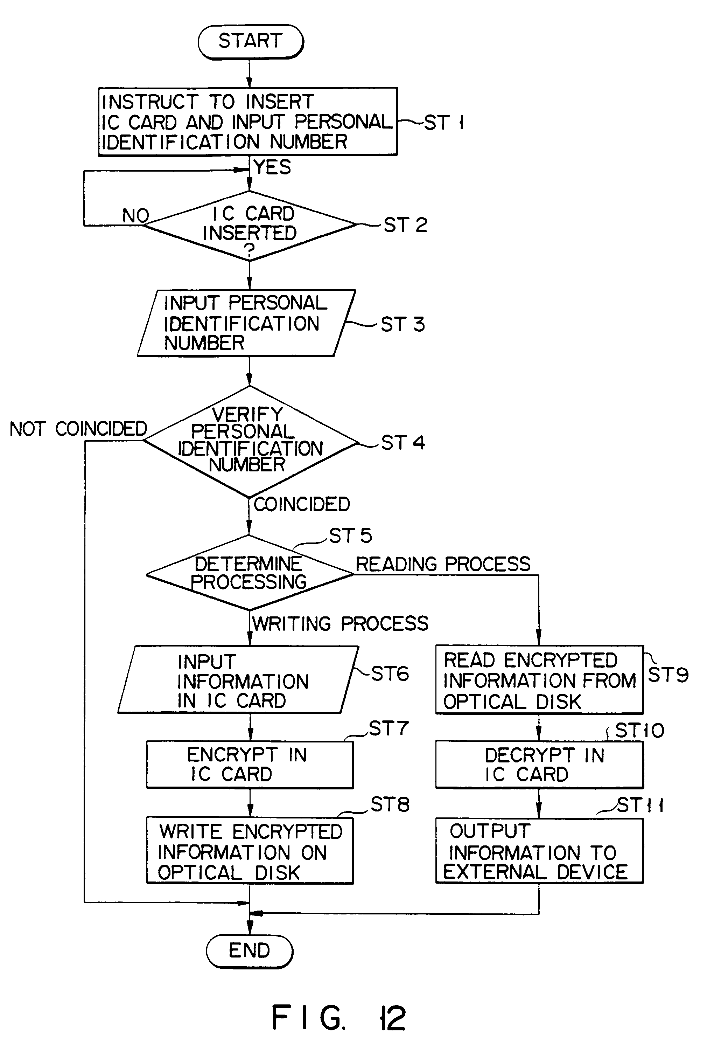

Fig. 11 is a block diagram illustrating the arrangement of an electronic filing system as one embodiment of an information processing apparatus. In this electronic filing system, encrypted information is recorded on an optical disk as an information recording medium, using the above-described IC card 1. The electronic filing system comprises a controller 40 for executing the general control of the system, a program memory 41, which stores a program for operating the controller 40, a data memory 42, which temporarily stores input information or read-out information, an optical disk 43 where input information is to be recorded, a write/read unit 44, which writes information to or reads information from the optical disk 43, a keyboard 45 for conducting various operations, a display device 46 for presenting various displays, a scanner 47 for inputting information to be written on the optical disk 43, a printer 48 for printing information read from the optical disk 43, an IC card unit 49 for exchanging information with the functional element 3 in the IC card 1, and a key pad 50 for inputting a personal identification number.

The operation of the electronic filing system in Fig. 11 will now be described with reference to the flowchart shown in Fig. 12.

This description covers the case where the functional element 3 in the IC card 1 is used as means for encrypting write information in the IC card 1 and decrypting read information, and a personal identification number such that the third person is prevented from operating the electronic filing system is stored in the functional element 3.

First, a user selects a writing process or a reading process with the keyboard 45. Then, the controller 40 suggested the user to insert his IC card or input his personal identification number using the display device 46 (step ST1). The controller 40 judges if the user has inserted the IC card 1 into the IC card unit 49 according to the suggestion (step ST2). The user inputs his personal identification number with the key pad 50 after loading the IC card 1 (step ST3). The input personal identification number is sent through the IC card unit 49 to the functional element 3 in the IC card 1. The functional element 3 then collates the received personal identification number with the one registered in the card 1 (step ST4). More particularly, the CPU 11 in the functional element 3 determines whether the received personal identification number is identical to the one registered in the EEPROM 15. The CPU 11 sends an coincidence signal or non-coincidence signal as the result of the collation to the controller 40 through the IC card unit 49. When receiving the non-coincidence signal, the controller 40 informs the user of an error on the display device 46. When the controller 40 receives the coincidence signal, the controller 40 judges whether it is the writing process or the reading process (step ST5).

In executing the writing process, the controller 40 uses the display device 46 to guide the user, to input register conditions (retrieval information). According to this guidance, the user enters the register conditions to the controller 40 using the keyboard 45. The controller 40 sends information, input by the scanner 47, and address information as a stored position on the optical disk 43, to the functional element 3 in the IC card 1 through the IC card unit 49 (step ST6). The functional element 3 subjects the information supplied from the controller 40 to encryption determined by the address information (step ST7). More specifically, in Fig. 4, the CPU 11 outputs the supplied information and the address information to the special arithmetic operation circuit 12. The special arithmetic operation circuit 12 encrypts the supplied information according to the encryption process which is determined by the address information. The types of encryption to be conducted in the special arithmetic operation circuit 12 are determined individually in accordance with the address information, i.e., the information that represents where the information is stored on the optical disk 43. This encryption type may be determined in accordance with optical-disk identifying information, which is supplied for each optical disk 43. The information encrypted in the functional element 3 is sent through the IC card unit 49 and the controller 40 to the optical-disk write/read unit 44. The write/read unit 44 writes the transferred information at the stored position on the optical disk 43 (step ST8). The controller 40 stores the register conditions and the address information as a pair into the data memory 42. Through the above operation, the writing process is completed.

In executing the reading process, the controller 40 uses the display device 46 to guide the user, to input retrieval conditions. According to this guidance, the user enters the retrieval conditions to the controller 40 using the keyboard 45. The controller 40 retrieves address information, as a stored position of the information corresponding to the retrieval condition, from the data memory 42. The controller 40 then reads information which is written at the indicated stored position by the address information of the optical disk 43 (step ST9). The information read out is one which has been encrypted. The controller 40 sends the read-out information and the address information to the functional element 3 in the IC card 1 through the IC card unit 49. The functional element 3 subjects the supplied information to encryption determined by the address information (step ST10). More specifically, in Fig. 4, the CPU 11 outputs the supplied information and the address information to the special arithmetic operation circuit 12. The special arithmetic operation circuit 12 decodes the supplied information according to the decrypting process which is determined by the address information. This decrypting content may be determined in accordance with optical-disk identifying information as in the case of encryption. The information decrypted in the functional element 3 is sent through the IC card unit 49 and the controller 40 to the printer 48 or the display device 46. The printer 48 or the display device 46 outputs the transferred information (step ST11), thus terminating the reading process.

According to the information processing apparatus, for example, the electronic filing system, encrypting the input information and decrypting encrypted information which has been read out are executed in the IC card 1. This feature permits information to be encrypted in different systems for different optical disks 43 even in the same electronic filing system. If a third party finds the decrypting system for one of the optical disks 43, therefore, he cannot immediately decrypt information on the other disks 43, which are recorded by the same electronic filing system. The present invention is extremely effective in preventing the third party from reading information recorded on optical disks.

According to this invention, information is encrypted using an encryption key or encrypting means, which are stored in the IC card 1 and whose content cannot be easily read. The information is recorded on the optical disk 43, and at the same time, the information is read out, the information is first decoded using the encryption key or decrypting means stored in the IC card 1, and then is output. The information recorded on the optical disk 43 is encrypted, and can hardly be analyzed.

Further in this invention, since the encrypting system varies for each optical disk 43, or for each information-stored position on the optical disk 43, different encryptions are possible for different optical disks 43 or different stored positions on the optical disk 43. The encrypted information recorded on the optical disk 43 cannot therefore be analyzed easily.

In the foregoing descriptions of this embodiment, encrypting the input information and decrypting the read-out information are executed in the IC card 1. The IC card 1 may be designed only to store an encryption key which serves to determine the types of the encrypting system and decrypting system, and the encryption key is sent from the IC card to the controller 40, for example, to execute information encryption or decryption therein according to the encryption key. Alternatively, multiple encryption logics may be stored in advance in the electronic filing system, and an encryption code based on which the controller 40 determines which encryption logic should be used to encrypt or decrypt information, may be stored in the IC card 1.

The individual embodiments have been described with reference to the case where an IC card having contacts is used, but a contactless IC card as described above may replace the former IC card.

The foregoing description has been given of an optical disk used as an information recording medium in an electronic filing system, but other types of information recording media, such as a magnetic disk and an opto-electromagnetic disk may be used as well. The present invention may be applied to a system other than an electronic filing system which also stores information in an information recording medium.

## Claims

1. A portable medium (3; 23) including
an integrated circuit device having individual circuit means integrally formed in a multi-layered structure on a single chip,
said multi-layered structure comprising:
first circuit means (14, 34) for storing data to be kept secret, said first circuit means being located on an intermediate layer of said multi-layered structure;
control means (11, 12, 13; 31, 32, 33) connected to said first circuit means, for processing said data to be kept secret, and for exchanging information with an external unit, and
second circuit means (15; 35) located on another layer of said multi-layered structure above said first circuit means, effecting a protection of said data to be kept secret in said first circuit means from an optical analysis carried out from the top of said multi-layered structure.

2. A portable medium (3; 23) according to claim 1, further comprising interface means, provided on said topmost layer, for exchanging information with said external unit.

3. A portable medium (3; 23) according to claim 1 or 2, wherein
the second circuit means is an EEPROM (15; 35) for storing input information;
the first circuit means is a ROM (14; 34) for storing secret data and a program necessary for a control operation, said ROM (14; 34) underlying a second layer in said multi-layered structure; and
said control means is a CPU (11, 31) for performing general control of said portable medium (3; 23) and exchanging information with an external unit.

4. A portable medium according to claim 1, 2 or 3, wherein said first circuit means (14; 34) includes means for storing information to be used for encryption/decryption of input information.

5. A portable medium according to claim 4, wherein said control means (11, 12, 13; 31, 32, 33) includes means for performing encryption/decryption of said input information according to said information stored in said storing means.

6. A portable medium (3; 23) according to claim 3, wherein
said EEPROM (15; 35) is located on a topmost layer,
said ROM (14; 34) is located on a second layer, and
a special arithmetic operation circuit (12; 32) and a RAM (13; 33) are both located on a third layer, for encrypting and decrypting an input signal; and
said CPU (11; 31) being located on a bottom layer.

## Patentansprüche

1. Tragbares Medium (3; 23) mit
einem integrierten Schaltungsbaustein, der einzelne Schaltungsmittel aufweist, die integral in einer mehrschichtigen Struktur auf einem einzigen Chip ausgebildet sind,
wobei die mehrschichtige Struktur aufweist:
eine erste Schaltungseinrichtung (14, 34) zum Speichern von geheimzuhaltenden Daten, wobei die erste Schaltungseinrichtung an einer zwischenliegenden Schicht der mehrschichtigen Struktur angeordnet ist,
eine Steuereinrichtung (11, 12, 13; 31, 32, 33), die mit der ersten Schaltungseinrichtung verbunden ist und zum Verarbeiten der geheimzuhaltenden Daten sowie zum Austauschen von Informationen mit einer externen Einheit dient, und
eine zweite Schaltungseinrichtung (15; 35), die an einer weiteren Schicht der mehrschichtigen Struktur oberhalb der ersten Schaltungseinrichtung angeordnet ist und einen Schutz der geheimzuhaltenden Daten in der ersten Schaltungseinrichtung gegenüber einer optischen Analyse bewirkt, die von der Oberseite der mehrschichtigen Struktur her ausgeführt wird.

2. Tragbares Medium (3; 23) nach Anspruch 1, das weiterhin eine Schnittstelleneinrichtung aufweist, die an der obersten Schicht vorgesehen ist und zum Austauschen von Informationen mit der externen Einheit dient.

3. Tragbares Medium (3; 23) nach Anspruch 1 oder 2, bei dem
die zweite Schaltungseinrichtung ein EEPROM (15; 35) zum Speichern von eingegebener Information ist,
die erste Schaltungseinrichtung ein ROM (14; 34) zum Speichern von geheimen Daten und eines Programms, das für einen Steuervorgang notwendig ist, ist, wobei der ROM (14; 34) unterhalb einer zweiten Schicht in der mehrschichtigen Struktur liegt und
die Steuereinrichtung eine CPU (11, 31) für die Durchführung einer allgemeinen Steuerung des tragbaren Mediums (3; 23) und für den Austausch von Informationen mit einer externen Einheit ist.

4. Tragbares Medium nach Anspruch 1, 2 oder 3, bei dem die erste Schaltungseinrichtung (14; 34) Mittel zum Speichern von Informationen enthält, die für die Verschlüsselung/Entschlüsselung von eingegebener Information einzusetzen sind.

5. Tragbares Medium nach Anspruch 4, bei dem die Steuereinrichtung (11, 12, 13; 31, 32, 33) eine Einrichtung zum Durchführen einer Verschlüsselung/Entschlüsselung der eingegebenen Information in Abhängigkeit von den Informationen, die in der Speichereinrichtung gespeichert sind, enthält.

6. Tragbares Medium (3; 23) nach Anspruch 3, bei dem
das EEPROM (15; 35) an einer obersten Schicht angeordnet ist,
der ROM (14; 34) an einer zweiten Schicht angeordnet ist, und
eine spezielle arithmetische Verarbeitungsschaltung (12; 32) und ein RAM (13; 33) beide an einer dritten Schicht zum Verschlüsseln und Entschlüsseln eines eingegebenen Signals angeordnet sind, und
die CPU (11; 31) an einer bodenseitigen Schicht angeordnet ist.

## Revendications

1. Support d'information portable (3 ; 23) incluant :
un dispositif de circuit intégré comportant un moyen de circuit individuel formé d'un seul tenant selon une structure multicouche sur une unique puce,
ladite structure multicouche comprenant :
un premier moyen de circuit (14, 34) pour stocker des données devant être maintenues secrètes, ledit premier moyen de circuit étant placé sur une couche intermédiaire de ladite structure multicouche ;
un moyen de commande (11, 12, 13 ; 31, 32, 33) connecté audit premier moyen de circuit pour traiter lesdites données à maintenir secrètes et pour échanger une information avec une unité externe ; et
un second moyen de circuit (15 ; 35) placé sur une autre couche de ladite structure multicouche au-dessus dudit premier moyen de circuit, réalisant une protection desdites données à maintenir secrètes dans ledit premier moyen de circuit vis-à-vis d'une analyse optique mise en oeuvre depuis le dessus de ladite structure multicouche.

2. Support d'information portable (3; 23) selon la revendication 1, comprenant en outre un moyen d'interface prévu sur ladite couche la plus supérieure pour échanger une information avec ladite unité externe.

3. Support d'information portable (3 ; 23) selon la revendication 1 ou 2, dans lequel:
le second moyen de circuit est une EEPROM (15 ; 35) pour stocker une information d'entrée ;
le premier moyen de circuit est une ROM (14 ; 34) pour stocker des données secrètes et un programme nécessaire pour une opération de commande, ladite ROM (14 ; 34) s'étendant au-dessous d'une seconde couche dans ladite structure multicouche ; et
ledit moyen de commande est une CPU (11, 31) pour réaliser une commande générale dudit support d'information portable (3 ; 23) et pour échanger une information avec une unité externe.

4. Support d'information portable selon la revendication 1, 2 ou 3, dans lequel ledit premier moyen de circuit (14 ; 34) inclut un moyen pour stocker une information à utiliser pour un cryptage/décryptage d'une information d'entrée.

5. Support d'information portable selon la revendication 4, dans lequel ledit moyen de commande (11, 12, 13 ; 31, 32, 33) inclut un moyen pour réaliser un cryptage/décryptage de ladite information d'entrée conformément à ladite information stockée dans ledit moyen de stockage.

6. Support d'information portable (3; 23) selon la revendication 3, dans lequel :
ladite EEPROM (15 ; 35) est placée sur une couche la plus supérieure ;
ladite ROM (14 ; 34) est placée sur une seconde couche ; et
un circuit d'opération arithmétique spécial (12 ; 32) et une RAM (13 ; 33) sont tous deux placés sur une troisième couche pour crypter et décrypter un signal d'entrée ; et
ladite CPU (11 ; 31) est placée sur une couche inférieure.
